# EUROPEAN PATENT APPLICATION

(11) **EP 4 539 197 A1**
(43) Date of publication of application: **16.04.2025**
(21) Application number: 23939889.4
(22) Date of filing: 05.12.2023
(51) Int. Cl.: H01M 10/42, H01M 10/04, H01M 50/152, H01M 50/538, H01M 50/213, H01M 50/249

(54) **CYLINDRICAL BATTERY, AND BATTERY PACK AND VEHICLE INCLUDING SAME**

(30) Priority: 26.05.2023 KR 20230068708
(71) Applicant: LG Energy Solution, Ltd., Seoul 07335 (KR)
(72) Inventor: KWON, Yong-Hwan, Daejeon 34122 (KR); KIM, Do-Gyun, Daejeon 34122 (KR); PARK, Jeong-Ho, Daejeon 34122 (KR); JANG, Yoon-Ho, Daejeon 34122 (KR)
(74) Representative: Goddar, Heinz J.
(86) International application number: PCT/KR2023/019927
(87) International publication number: WO 2024/248250

(57) **Abstract**

Disclosed is a cylindrical battery configured to reduce the deformation of an electrode assembly and the intensity of flame when a thermal event occurs inside a battery cell. A cylindrical battery according to an aspect of the disclosure includes: an electrode assembly including a first electrode, a second electrode, and a separator interposed therebetween and having a center hole formed by winding a laminate including the first electrode, the second electrode, and the separator around a winding axis; a battery housing configured to accommodate the electrode assembly through an opening formed on one side thereof; and a resist member at least partially received inside the center hole.

## Description

### TECHNICAL FIELD

The present disclosure relates to a cylindrical battery, and a battery pack and a vehicle including the same, and more specifically, it relates to a cylindrical battery configured to reduce deformation of an electrode assembly and the intensity of flame when a thermal event occurs therein, and a battery pack and a vehicle including the same.

The present application claims priority to Korean Patent Application No. 10-2023-0068708 filed on May 26, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple batteries in parallel depending on the charge/discharge capacity required for the battery pack. Accordingly, the number of batteries included in the battery pack and the electrical connection may be configured in various ways depending on the required output voltage or charge/discharge capacity.

However, in the case where a large number of battery modules are provided densely in a small space, they may be vulnerable to accidents such as fire or explosion. For example, in the case where a flame occurs due to a thermal event inside any one battery cell, the flame may transfer to the outside, causing a chain of thermal events in adjacent battery cells.

### DISCLOSURE

### Technical Problem

The present disclosure has been designed to solve the problems of the related art, and therefore the present disclosure is intended to prevent deformation of the electrode assembly when a thermal event occurs inside the battery cell.

In another aspect, the present disclosure is intended to reduce the intensity of flame and gas when a thermal event occurs.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a cylindrical battery including: an electrode assembly including a first electrode, a second electrode, and a separator interposed therebetween and having a center hole formed by winding a laminate including the first electrode, the second electrode, and the separator around a winding axis; a battery housing configured to accommodate the electrode assembly through an opening formed on one side thereof; and a resist member at least partially received inside the center hole.

The resist member may include: a first portion received inside the center hole; and a second portion located outside the center hole.

The first portion of the resist member may have a shape corresponding to the center hole.

At least a portion of the second portion of the resist member may be located on the electrode assembly.

The cylindrical battery may include an insulating member provided between the resist member and the electrode assembly.

The cylindrical battery may include a first collector including an electrode assembly-coupled portion to be coupled to the electrode assembly and a housing-coupled portion to be coupled to the battery housing.

The first collector may have a collector hole in a portion corresponding to the center hole.

At least a portion of the first portion of the resist member may be located inside the collector hole.

The cylindrical battery may include an insulating member between the resist member and the first collector.

The resist member may include a porous metal.

The cylindrical battery may include a top cap configured to cover the opening.

The second portion of the resist member may have a height corresponding to the distance between the electrode assembly and the top cap.

The cylindrical battery may include an insulating member provided between the resist member and the top cap.

A battery unit structure according to the present disclosure may include the cylindrical battery according to the present disclosure.

A vehicle according to the present disclosure may include the battery unit structure according to the present disclosure.

### Advantageous Effects

According to one aspect of the present disclosure, when a thermal event occurs inside the battery, deformation of the electrode assembly due to drag force generated along the outer circumference of the center hole can be prevented. This is due to the fact that the resist member is inserted and fixed into the center hole, thereby preventing deformation due to drag force.

Additionally, the resist member may include a porous metal. The resist member may include a plurality of metal meshes. In this case, the resist member is able to reduce the intensity of flame and gas. If flame or gas comes into contact with the resist member including a porous metal, the resist member may absorb heat. At the same time, the gas may exit through the porous resist member. Therefore, the resist member may lower the temperature of flame and gas while allowing the gas to exit.

According to another aspect of the present disclosure, if the resist member is fitted tightly into the center hole or if the diameter or size of the center hole becomes smaller due to swelling during use of the battery, the resist member will be fixed more firmly to the center, thereby more effectively preventing deformation of the electrode assembly. In addition, the resist member may be coupled to the electrode assembly and/or the first collector to maximize the effect of reducing the intensity of flame and gas.

According to another aspect of the present disclosure, even if the separator ruptures as the diameter or size of the center hole becomes smaller than necessary due to swelling, it is possible to prevent a short circuit between the electrode assembly and the resist member.

According to another aspect of the present disclosure, it is possible to prevent unnecessary electrical connections or resultant short circuits between the resist member and the first collector.

### DESCRIPTION OF DRAWINGS

FIG. 1 is a diagram illustrating the appearance of a cylindrical battery according to the present disclosure.
FIG. 2 is a diagram illustrating an electrode assembly before winding, which is included in a cylindrical battery according to the present disclosure.
FIG. 3 is a partially cross-sectional view of a cylindrical battery according to the present disclosure.
FIG. 4 is a diagram illustrating the deformation of an electrode assembly when a thermal event occurs inside an existing cylindrical battery.
FIG. 5 is a 3D diagram illustrating the deformation of an electrode assembly when a thermal event occurs inside an existing cylindrical battery.
FIG. 6 is a diagram illustrating the internal pressure over time when a thermal event occurs inside an existing cylindrical battery.
FIG. 7 is an enlarged view of a portion in FIG. 6 illustrating the flow of pressure.
FIG. 8 is a diagram illustrating a resist member included in a cylindrical battery according to the present disclosure.
FIG. 9 is a partially cross-sectional view of a resist member having an insulated surface, which is included in a cylindrical battery according to the present disclosure.
FIG. 10 is a diagram illustrating a first collector included in a cylindrical battery according to the present disclosure.
FIG. 11 is a partially cross-sectional view of a resist member having an insulated portion different from that of the resist member shown in FIG. 9, which is included in a cylindrical battery according to the present disclosure.
FIG. 12 is a cross-sectional view of a cylindrical battery according to the present disclosure.
FIG. 13 is a partially cross-sectional view of a cylindrical battery having a different structure from that in FIG. 3 according to the present disclosure.
FIG. 14 is a diagram illustrating a battery unit structure according to the present disclosure.
FIG. 15 is a diagram illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. In addition, the thicknesses, ratios, and sizes of the elements in the attached drawings may be exaggerated to effectively explain the technical features of the present disclosure.

It should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

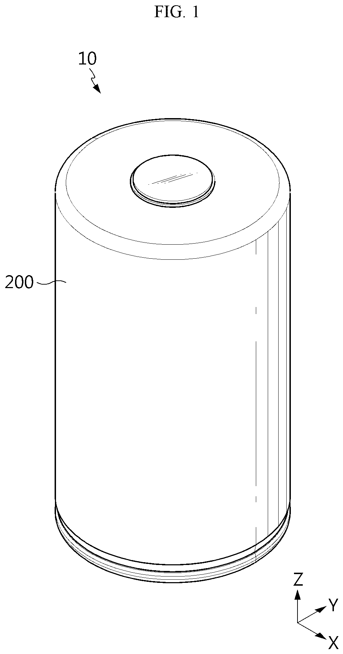

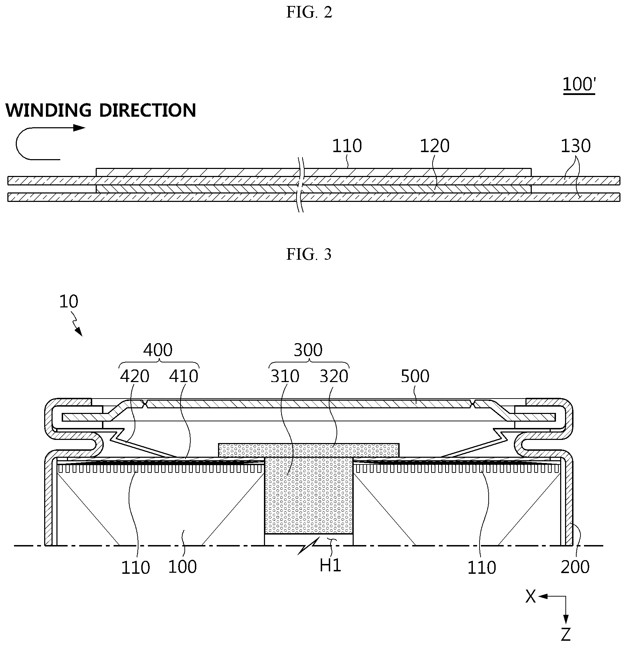

FIG. 1 is a diagram illustrating the appearance of a cylindrical battery according to the present disclosure. FIG. 2 is a diagram illustrating an electrode assembly before winding, which is included in a cylindrical battery according to the present disclosure. FIG. 3 is a partially cross-sectional view of a cylindrical battery according to the present disclosure.

Referring to FIGS. 1 to 3, the cylindrical battery 10 according to the present disclosure may include an electrode assembly 100, a battery housing 200, and a resist member 300.

The electrode assembly 100 may include a first electrode 110, a second electrode 120, and a separator 130 interposed therebetween. The electrode assembly 100 may have a center hole H1 that is formed by winding a laminate 100' including the first electrode 110, the second electrode 120, and the separator 130 around a winding axis. The first electrode 110, the second electrode 120, and the separator 130 interposed therebetween may be wound around the winding axis, thereby providing the center hole H1. The first electrode 110 may be a negative electrode or positive electrode, and the second electrode 120 may be an electrode having a polarity opposite that of the first electrode 110. Referring to FIG. 2, the electrode assembly 100 may be manufactured by winding the laminate 100' that is formed by sequentially laminating the first electrode 110, the separator 130, the second electrode 120, and the separator 130 at least once. That is, the electrode assembly 100 applied to the present disclosure may be a jellyroll-type electrode assembly 100. The electrode assembly 100 may have a center hole H1 formed at substantially the center thereof and extending in the height direction (parallel to the Z-axis).

The battery housing 200 may accommodate the electrode assembly 100 through an opening formed on one side (in the -Z-axis direction). The battery housing 200 is a substantially cylindrical container with an opening formed on one side thereof, and may be made of a conductive metal material. The battery housing 200 may also accommodate an electrolyte through the opening. However, the battery housing 200 in the present disclosure is not limited to the above form.

The resist member 300 may be at least partially received inside the center hole H1. At least a portion of the resist member 300 may be inserted into the center hole H1.

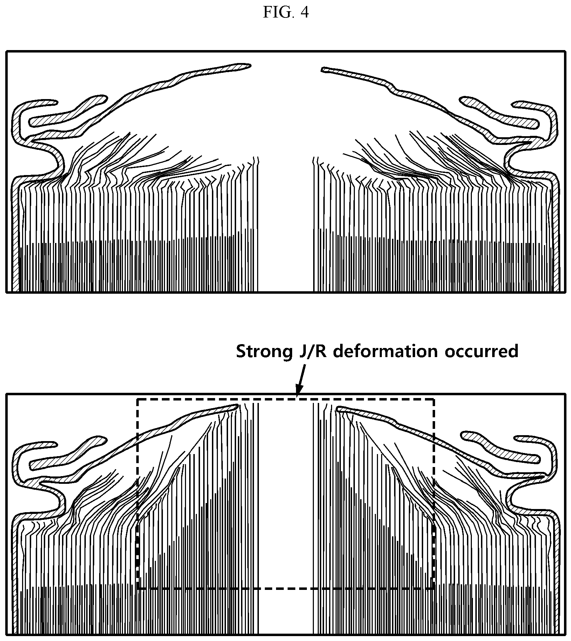

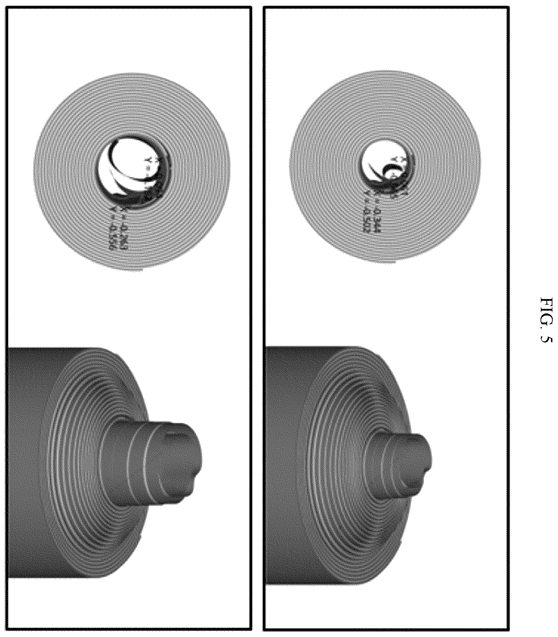

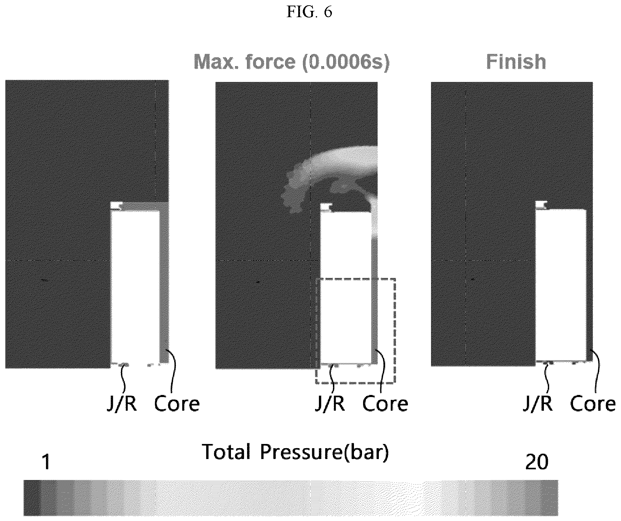

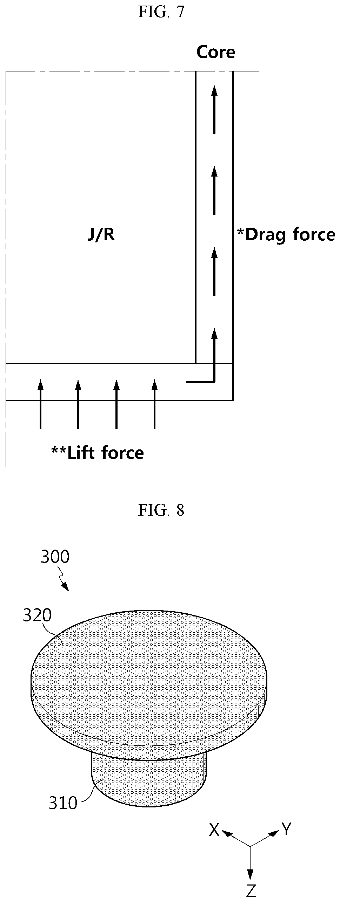

FIG. 4 is a diagram illustrating the deformation of an electrode assembly when a thermal event occurs inside an existing cylindrical battery. FIG. 5 is a 3D diagram illustrating the deformation of an electrode assembly when a thermal event occurs inside an existing cylindrical battery. FIG. 6 is a diagram illustrating the internal pressure over time when a thermal event occurs inside an existing cylindrical battery. FIG. 7 is an enlarged view of a portion in FIG. 6 illustrating the flow of pressure.

Hereinafter, problems caused in the case where a thermal event occurs inside the battery in the conventional invention will be described in detail with reference to FIGS. 4 to 7.

Referring to FIGS. 4 and 5, if flame and gas is discharged through a center hole due to a thermal event occurring inside the battery, the electrode assembly is deformed. In particular, a portion adj acent to the center hole of the electrode assembly is greatly deformed.

Referring to FIGS. 6 and 7, the deformation of the portion adjacent to the center hole of the electrode assembly described above may occur due to drag force (the force acting along the core when the thermal event occurs) generated on the inner circumferential surface of the center hole. In addition, lift force (the force acting on the entire J/R when the thermal event occurs) that lifts the electrode assembly overall may also be one of the causes of the deformation of the electrode assembly.

However, the cylindrical battery 10 of the present disclosure, to which the resist member 300 is applied, may prevent the deformation of the electrode assembly 100 due to the drag force generated along the outer circumference of the center hole H1 when a thermal event occurs inside the battery. This is due to the fact that the resist member 300 is inserted and fixed into the center hole H1, thereby preventing the deformation due to the drag force.

In addition, the resist member 300 may include a porous metal. The resist member 300 may include a plurality of metal meshes. In this case, the resist member 300 may reduce the intensity of flame and gas. High-temperature gas and flame discharged from the center hole may come into contact with the porous material while passing through the resist member to dissipate temperature and energy thereof. When the flame and gas comes into contact with the resist member 300 including a porous metal, the resist member 300 may absorb the heat. At the same time, the gas may exit through the porous resist member 300. Accordingly, the resist member 300 may lower the temperature of flame and gas while allowing the gas to exit.

FIG. 8 is a diagram illustrating a resist member included in a cylindrical battery according to the present disclosure.

Referring to FIG. 8, the resist member 300 may include a first portion 310 and a second portion 320.

The first portion 310 may be received inside the center hole H1. The first portion 310 may be inserted into the center hole H1. The first portion 310 may have a shape corresponding to the center hole H1. The first portion 310 may have a substantially cylindrical shape. The first portion 310 may have a diameter substantially equal to or smaller than the diameter of the center hole H1.

The second portion 320 may be positioned outside the center hole H1. At least a portion of the second portion 320 may be placed on the electrode assembly 100. The second portion 320 may be coupled to the electrode assembly 100 and/or a first collector 400, which will be described later.

The first portion 310 may be formed to extend downwards (in the -Z-axis direction) from substantially the center of the lower surface (the surface directed in the -Z-axis direction) of the second portion 320. The first portion 310 and the second portion 320 may be formed integrally with each other. Alternatively, the first portion 310 and the second portion 320 may be manufactured separately, and then coupled to each other by welding or bolting.

According to this configuration of the present disclosure, if the first portion 310 is fitted tightly into the center hole H1 or if the diameter or size of the center hole H1 becomes smaller due to swelling during use of the battery, the first portion 310 will be naturally fixed into the center hole H1 more firmly, thereby more effectively preventing deformation of the electrode assembly 100. In addition, the second portion 320 may be coupled to the electrode assembly 100 and/or the first collector 400 to maximize the effect of reducing the intensity of flame and gas.

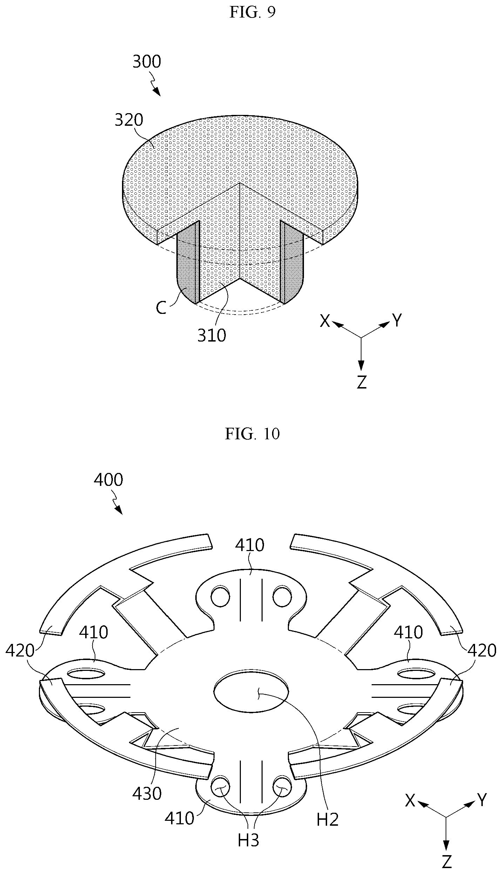

FIG. 9 is a partially cross-sectional view of a resist member having an insulated surface, which is included in a cylindrical battery according to the present disclosure.

Referring to FIG. 9 together with FIG. 3, the cylindrical battery 10 may have an insulating member C.

The insulating member C may be provided between the resist member 300 and the electrode assembly 100. For example, as shown in FIG. 9, the insulating member C may be provided between the resist member 300 and the electrode assembly 100 inside the center hole H1. In this case, at least a portion of the outer circumferential surface of the first portion 310 may be insulated. However, the surface of a portion of the resist member 300 facing the electrode assembly 100 may be insulated without a separate member.

According to this configuration of the present disclosure, even if the separator 130 ruptures as the diameter or size of the center hole H1 becomes smaller than necessary due to swelling, it is possible to prevent a short circuit between the electrode assembly 100 and the resist member 300.

FIG. 10 is a diagram illustrating a first collector 400 included in a cylindrical battery 10 according to the present disclosure.

Referring to FIG. 10 together with FIG. 3, the cylindrical battery 10 may include a first collector 400.

The first collector 400 may include an electrode assembly-coupled portion 410 and a housing-coupled portion 420. The electrode assembly-coupled portion 410 may be coupled to the first electrode 110. The electrode assembly-coupled portion 410 may be formed to extend outwards from a support portion 430 disposed on the electrode assembly 100. The housing-coupled portion 420 may be coupled to the battery housing 200. The housing-coupled portion 420 may be formed to extend outwards from the support portion 430 disposed on the electrode assembly 100. At least a portion of the second portion 320 may be positioned in the area corresponding to the support portion 430 disposed on the electrode assembly 100.

The first collector 400 may have a collector hole H2 in the portion corresponding to the center hole H1. The resist member 300 may be inserted into the center hole H1 through the collector hole H2. The first portion 310 may be inserted into the center hole H1 through the collector hole H2. At least a portion of the resist member 300 may be received inside the collector hole H2. At least a portion of the first portion 310 may be received inside the collector hole H2.

The collector hole H2 may function as a passage for insertion of a welding rod for welding between a battery terminal T and a second collector P, which will be described later, or welding between the battery terminal T and the second electrode 120, or for radiation of laser thereon. In addition, it may also function as a passage to ensure effective impregnation of an electrolyte into the electrode assembly 100 when injecting the electrolyte into the battery, and the first collector 400 may have an injection hole H3 on the electrode assembly-coupled portion 410 in order to improve the impregnation performance more effectively.

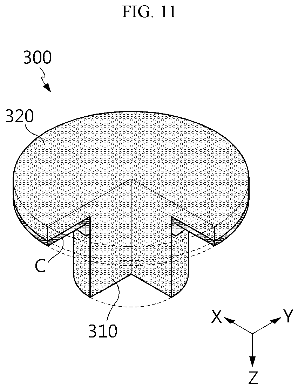

FIG. 11 is a partially cross-sectional view of a resist member included in a cylindrical battery according to the present disclosure, which has an insulated portion different from that of the resist member shown in FIG. 9.

Referring to FIG. 11 together with FIG. 3, the cylindrical battery 10 may have an insulating member C between the resist member 300 and the first collector 400. However, the surface of a portion of the resist member 300 facing the first collector 400 may be insulated without a separate member. Accordingly, unnecessary electrical connections or resultant short circuits between the resist member 300 and the first collector 400 may be prevented.

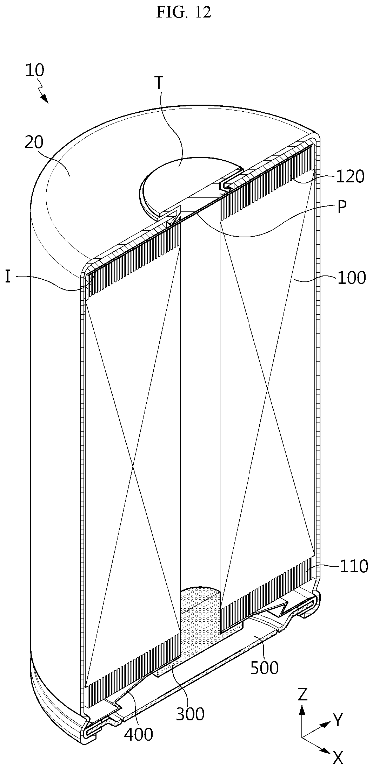

FIG. 12 is a cross-sectional view of a cylindrical battery according to the present disclosure.

Referring to FIG. 12, the cylindrical battery 10 may include a top cap 500, a terminal T, a second collector P, and an insulator I.

The terminal T may be electrically connected to the second electrode 120. The terminal T may penetrate through a closed portion of the battery housing 200, which is provided on the opposite side of the opening of the battery housing 200, to be electrically connected to the second electrode 120. The terminal T may penetrate through substantially the center of the closed portion of the battery housing 200. The terminal T may be coupled to the second collector P, which will be described later, thereby establishing an electrical connection with the electrode assembly 100.

The second collector P may be electrically coupled to the second electrode 120. The second collector P may be electrically coupled to the terminal T. The second collector P may have a terminal-coupled portion to be coupled to the terminal T, and a second coupling portion to be coupled to the second electrode 120.

The top cap 500 may be configured to cover the opening. According to the cylindrical battery 10 according to the present disclosure, since the first electrode 110 and the second electrode 120 are electrically connected through the terminal and the battery housing 200 in the closed portion having the terminal provided thereon, the top cap 500 provided in the opening on the opposite side of the closed portion may be configured to have a polarity or to not have a polarity.

The top cap 500 may have a venting portion that is configured to be weaker than surrounding areas. The venting portion may have a smaller thickness that the surrounding areas. The venting portion may be formed by notching one or both sides of the top cap 500, thereby partially reducing the thickness of the top cap 500. According to this structure, if the internal pressure of the battery housing 200 rises to a predetermined level or more due to an abnormality occurring in the battery, the venting portion may be broken so that gas may be discharged.

The insulator I may be positioned on the second electrode 120 to insulate the battery housing 200 from the tab of the second electrode 120. The insulator I may be interposed between the closed portion of the battery housing 200 and the electrode assembly 100 or between the closed portion of the battery housing 200 and the second collector P. The insulator I may include, for example, a resin material having insulating properties. The insulator I may have a hole substantially at the center such that the terminal T may be electrically connected with the second electrode 120.

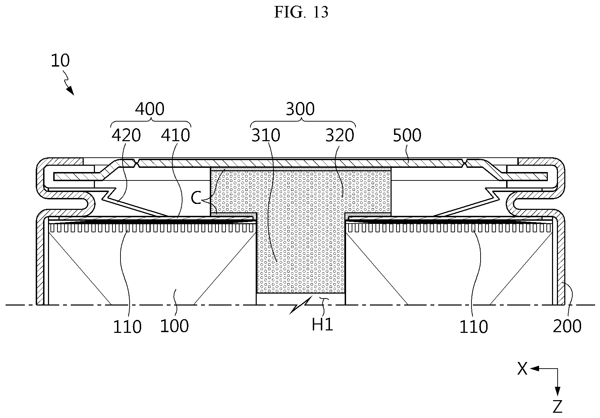

FIG. 13 is a partially cross-sectional view of a cylindrical battery having a different structure from that in FIG. 3 according to the present disclosure.

Referring to FIG. 13, the cylindrical battery 10 may have an insulating member C between the resist member 300 and the top cap 500. However, the surface of a portion of the resist member 300 facing the top cap 500 may be insulated without a separate member. Accordingly, the cylindrical battery 10 may prevent unnecessary electrical connections or resultant short circuits between the resist member 300 and the top cap 500.

Referring to FIG. 13 together with FIG. 12, the resist member 300 may be interposed between the electrode assembly 100 and the top cap 500. The second portion 320 of the resist member 300 may have a height corresponding to the distance between the electrode assembly 100 and the top cap 500.

According to this configuration of the present disclosure, the resist member 300 may effectively prevent the electrode assembly 100 from moving inside the battery housing 200 due to the gap between the top cap 500 and the electrode assembly 100. In particular, referring to FIGS. 6 and 7, the deformation of the electrode assembly 100 due to the lift force described above may be prevented. In addition, the resist member 300 may prevent damage to the coupling portion between the electrode assembly 100 and the first collector 400 and/or the coupling portion between the first collector 400 and the battery housing 200.

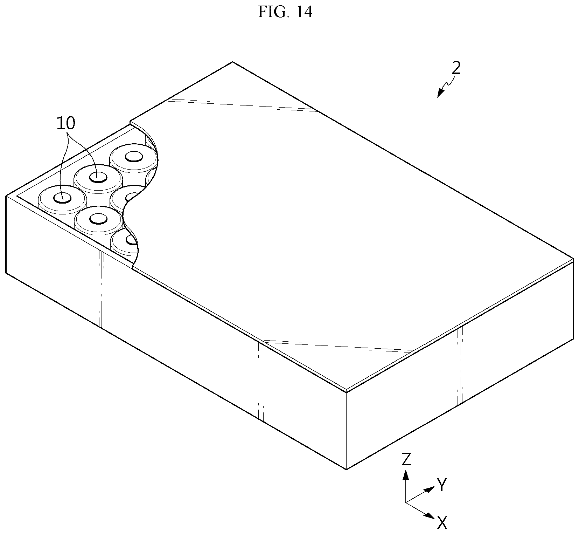

FIG. 14 is a diagram illustrating a battery unit structure 2 according to the present disclosure.

Referring to FIG. 14, the battery unit structure 2 according to the present disclosure may include a cylindrical battery 10. For example, the battery unit structure 2 may be a battery module or battery pack. The battery unit structure 2 may further include various elements of the battery pack or battery module, in addition to the cylindrical battery 10, such as a BMS, a bus-bar, a pack (or module) case, a relay, a current sensor, and the like, which are known at the time of filing the present disclosure.

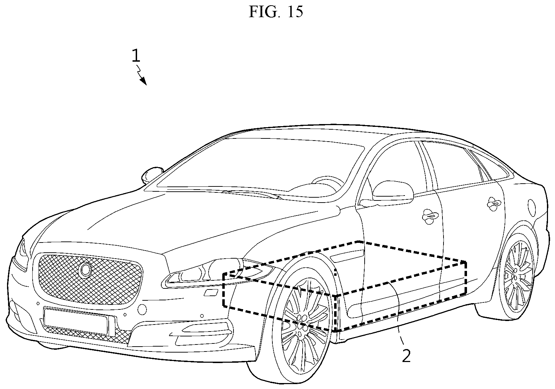

FIG. 15 is a diagram illustrating a vehicle 1 according to the present disclosure.

Referring to FIG. 15, the vehicle 1 according to the present disclosure may include a battery unit structure 2. The vehicle 1 may be a hybrid vehicle 1 or an electric vehicle 1. The vehicle 1 according to the present disclosure may further include various other components included in the vehicle 1 in addition to the battery unit structure 2. For example, the vehicle 1 according to the present disclosure may further include a car body, a motor, and a control device such as an ECU (electronic control unit), in addition to the battery unit structure 2 according to the present disclosure.

As described above, although the present disclosure has been described based on preferred embodiments with reference to the attached drawings, it is obvious to those skilled in the art that various modifications can be made from this description without departing from the scope of the present disclosure. Accordingly, the scope of the present disclosure should be construed according to the claims encompassing the various modifications.

## Claims

1. A cylindrical battery comprising:
an electrode assembly comprising a first electrode, a second electrode, and a separator interposed therebetween and having a center hole formed by winding a laminate comprising the first electrode, the second electrode, and the separator around a winding axis;
a battery housing configured to accommodate the electrode assembly through an opening formed on one side thereof; and
a resist member at least partially received inside the center hole.

2. The cylindrical battery according to claim **1,**
wherein the resist member comprises:
a first portion received inside the center hole; and
a second portion located outside the center hole.

3. The cylindrical battery according to claim 2,
wherein the first portion of the resist member has
a shape corresponding to the center hole.

4. The cylindrical battery according to claim 2,
wherein at least a portion of the second portion of the resist member is located on the electrode assembly.

5. The cylindrical battery according to claim 4,
further comprising
an insulating member provided between the resist member and the electrode assembly.

6. The cylindrical battery according to claim 2,
further comprising
a first collector comprising an electrode assembly-coupled portion to be coupled to the electrode assembly and a housing-coupled portion to be coupled to the battery housing.

7. The cylindrical battery according to claim 6,
wherein the first collector has
a collector hole in a portion corresponding to the center hole.

8. The cylindrical battery according to claim 7,
wherein at least a portion of the first portion of the resist member is located inside the collector hole.

9. The cylindrical battery according to claim 6,
further comprising
an insulating member between the resist member and the first collector.

10. The cylindrical battery according to claim 1,
wherein the resist member comprises
a porous metal.

11. The cylindrical battery according to claim 2,
further comprising
a top cap configured to cover the opening.

12. The cylindrical battery according to claim 11,
wherein the second portion of the resist member
has a height corresponding to the distance between the electrode assembly and the top cap.

13. The cylindrical battery according to claim 12,
further comprising
an insulating member provided between the resist member and the top cap.

14. A battery unit structure comprising the cylindrical battery according to any one of claims 1 to 13.

15. A vehicle comprising the battery unit structure according to claim 14.
